# EUROPÄISCHE PATENTANMELDUNG

(11) **EP 2 199 584 A2**
(43) Veröffentlichungstag der Anmeldung: **23.06.2010**
(21) Anmeldenummer: 09015123.4
(22) Anmeldetag: 07.12.2009
(51) Int. Cl.: F02K 9/64

(54) **Raketenbrennkammer**

(30) Priorität: 15.12.2008 DE 102008061917
(71) Anmelder: Astrium GmbH, 82024 Taufkirchen (DE)
(72) Erfinder: Luger, Peter, Dr., 84329 Wurmannsquick (DE)
(74) Vertreter: Häußler, Henrik

(57) **Zusammenfassung**

Eine Heißgaskammer, insbesondere Brennkammer für ein Triebwerk zum Ausstoß einer heißen Gasströmung, insbesondere für ein Raketentriebwerk, mit einer Brennkammerwand (15), die eine inneren Oberfläche (12', 12") und an diese außen angrenzende Kühlkanäle (14) aufweist, zeichnet sich dadurch aus, dass die zur Brennkammer (4) weisende innere Oberfläche (12', 12") der Brennkammerwand (15) zumindest bereichsweise zur Vermeidung von Filmkondensation ausgestaltet ist.

## Beschreibung

### TECHNISCHES GEBIET

Die vorliegende Erfindung betrifft eine Heißgaskammer, insbesondere Brennkammer für ein Triebwerk zum Ausstoß einer heißen Gasströmung, insbesondere für ein Raketentriebwerk, gemäß dem Oberbegriff des Patentanspruchs 1.

### STAND DER TECHNIK

Die an eine Brennkammerwand angrenzende Kühleinrichtung einer Brennkammer hat üblicherweise das Ziel, die Brennkammerwand gegenüber den heißen Verbrennungsgasen so kühl zu halten, dass eine ausreichende Lebensdauer der Brennkammer erzielt wird. Bei speziellen Arten von Raketentriebwerken wie regenerativ gekühlten Triebwerken ist es jedoch gerade wünschenswert, einen höheren Wärmeeintrag in die Kühleinrichtung zu erzielen, da bei diesen Raketentriebwerken die von der Kühleinrichtung aufgenommene Wärmemenge zum effektiven Betrieb des Triebwerkes, beispielsweise zum Antrieb von Treibstoffpumpen, weiterverwendet wird.

Dieser die Treibstoffpumpen, beispielsweise Turbopumpen, antreibende Teil des Treibstoffs wird anschließend ebenso wie der Hauptteil des Treibstoffstroms in die Brennkammer eingeleitet. Bei diesem sogenannten Expander-Verfahren wird ein umso effektiverer Betrieb des Triebwerks ermöglicht, je höher die von der Kühleinrichtung aufgenommene Wärmemenge ist.

Die Temperatur der Brennkammerwand wird aufgrund dieser Kühlung durch den flüssigen Treibstoff stark herabgekühlt, was zur Folge hat, dass die Temperatur der inneren Oberfläche der Brennkammerwand so weit absinken kann, dass es dort zur Kondensation des Verbrennungsprodukts Wasser im Bereich der wandnahen Heißgasströmung kommt.

Auf der wegen der erforderlichen hohen Wärmeleitfähigkeit in der Regel aus Kupfer bestehenden inneren Brennkammerwand bildet das kondensierte Wasser einen Wasserfilm aus, der den Wärmeübergang vom Heißgas in der Brennkammer zum Kühlmedium, das durch die Kühlkanäle fließt, erschwert. Des Weiteren kann sich der Wasserfilm von der inneren Brennkammerwand lösen und von dem Heißgas mitgerissen werden, wobei der Wasserfilm dann auf die innere Wandung einer in Strömungsrichtung an die Brennkammer angrenzenden Düse auftrifft. Dieses Auftreffen des abgelösten Wasserfilms, der im Extremfall einen Wasserstrahl bildet, der auf die innere Düsenwand auftrifft, führt zu erheblichen thermischen Spannungen im Material der Düsenwand. Beispielsweise kann die Düsenwand aus keramischem Material bestehen. Durch den vom Auftreffen des Wasserfilms auf die innere Düsenwand verursachten lokalen Kühleffekt der inneren Düsenwand kann es zu Materialbeschädigungen, beispielsweise zu Rissen im Material der Düsenwand kommen.

### DARSTELLUNG DER ERFINDUNG

Aufgabe der vorliegenden Erfindung ist es daher, eine gattungsgemäße Heißgaskammer so weiterzubilden, dass eine durch die Wasserkondensation an der inneren Brennkammerwand verursachte Verschlechterung des Wärmeübergangs zwischen Heißgas und Kühlmedium reduziert ist und dass die Gefahr einer Beschädigung der nachgeordneten Düse durch Auftreffen von Kondensat reduziert ist.

Diese Aufgabe wird durch die Heißgaskammer mit den Merkmalen des Patentanspruchs 1 gelöst.

### VORTEILE

Durch die Ausgestaltung der zur Brennkammer weisenden inneren Oberfläche der Brennkammerwand zumindest bereichsweise derart, dass Filmkondensation an der inneren Oberfläche der Brennkammerwand vermieden wird, wird erreicht, dass die im Bereich der Brennkammerwand auftretende Kondensation nicht als Filmkondensation erfolgt, sondern es tritt dort nur Tropfenkondensation auf. Durch diese Tropfenkondensation wird der Wärmeübergang zwischen dem Heißgas in der Brennkammer und dem Kühlmittel in den Kühlkanälen wesentlich verbessert. Des Weiteren bieten die sich auf der inneren Oberfläche der Brennkammerwand ausbildenden Kondensattropfen eine deutlich größere Angriffsfläche für die schnelle Heißgasströmung in der Brennkammer, als ein geschlossener, glatter Wasserfilm bei Filmkondensation. Die sich erfindungsgemäß ausbildenden Kondensattropfen werden somit von der Heißgasströmung mitgerissen und zerstäubt, so dass es kein lokales Auftreffen eines Wasserfilms oder gar Wasserstrahls auf die Innenwand einer der Brennkammer nachgeordneten Düse gibt.

Vorzugsweise ist der Bereich der inneren Oberfläche stromabwärts des engsten Querschnitts der Brennkammer zur Vermeidung von Filmkondensation ausgestaltet. Dieser Bereich vom Brennkammerhals abwärts ist im Stand der Technik besonders prädestiniert dafür, dass der durch Filmkondensation gebildete Wasserfilm abreißt, von der Heißgasströmung mitgerissen wird und auf die innere Düsenwand auftrifft. Wird hier erfindungsgemäß die Oberfläche so ausgebildet, dass Filmkondensation vermieden wird, so wird die Gefahr des Abrisses größerer Wasseransammlungen vermieden.

Besonders vorteilhaft ist es, wenn die zur Brennkammer weisende innere Oberfläche der Brennkammerwand zumindest bereichsweise zur Vermeidung von Filmkondensation hydrophob ausgebildet ist. Diese hydrophobe Oberflächenausgestaltung sorgt in besonders vorteilhafter Weise dafür, dass sich in diesem Bereich kein Kondensatfilm ausbilden kann, sondern allenfalls Kondensattropfen anlagern, die vom Heißgasstrom gleich wieder mitgerissen und zerstäubt werden.

Dabei ist es vorteilhaft, wenn der hydrophob ausgebildete Bereich der inneren Oberfläche mit einer hydrophoben Beschichtung versehen ist. Derartige Beschichtungen sind aus der Verfahrenstechnik allgemein bekannt und müssen im vorliegenden Fall temperaturbeständig sein und eine ausreichende Langlebigkeit aufweisen. Beispielhaft sei hier eine Beschichtung zur Erzielung des sogenannten Lotusblüten-Effekts erwähnt.

Besonders wirkungsvoll ist es, wenn die innere Oberfläche der Brennkammerwand unter der hydrophoben Schicht eine gegenüber der Oberfläche im nicht mit einer hydrophoben Beschichtung versehenen Brennkammerwandbereich erhöhte Rauigkeit aufweist. Dazu kann vor dem Aufbringen der hydrophoben Beschichtung die Wandrauigkeit der inneren Brennkammerwand in den hydrophob auszubildenden Bereichen erhöht werden. Diese sogenannte "super-hydrophob" ausgebildeten Brennkammerwandbereiche verhindern besonders wirkungsvoll das Ausbilden einer Filmbeschichtung.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: ein Raketentriebwerk mit regenerativer Kühlung nach dem Expander- Verfahren;
- Fig. 2: eine vergrößerte Querschnittsdarstellung entsprechend der Einzel- heit II aus Fig. 1;
- Fig. 3a: einen Ausschnitt des in Fig. 2 dargestellten Brennkammerwand- bereichs gemäß der Einzelheit III in Fig. 2 mit vergrößert dargestellten Kondensationstropfen; und
- Fig. 3b: den gleichen Bereich wie in Fig. 3a, jedoch bei einer herkömmlichen Brennkammerwand ohne hydrophobe Oberflächengestaltung mit einem Kondensatfilm.

### DARSTELLUNG VON BEVORZUGTEN AUSFÜHRUNGSBEISPIELEN

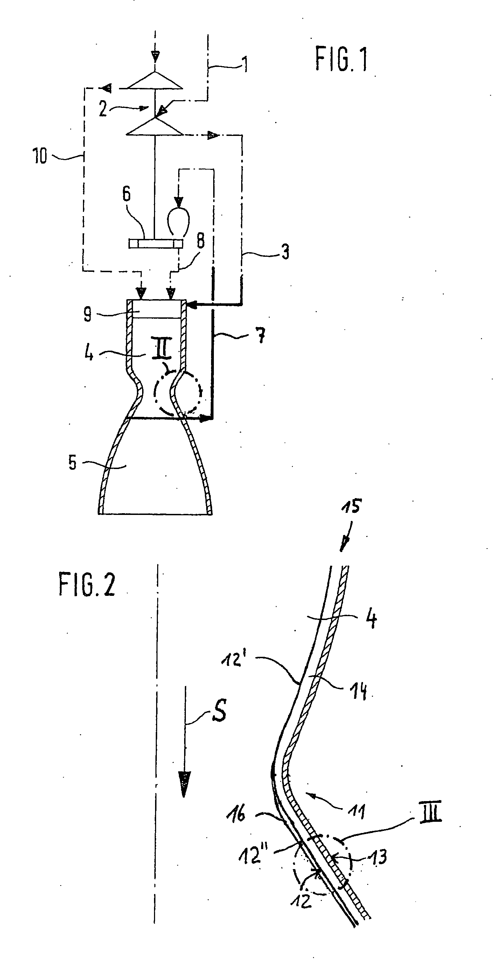

Fig. 1 zeigt beispielhaft einen speziellen Typ eines Raketentriebwerks, der nach dem Hauptstromverfahren ohne Vorverbrennung, auch genannt Expander-Verfahren, arbeitet. Es wird dabei ein erster Treibstoff (z.B: flüssiger Wasserstoff) in einer ersten Zuleitung 1 einer Treibstoffpumpe 2 zugeführt. Von dort zweigt eine Zuführung 3 ab, die den ersten Treibstoff einer Kühleinrichtung zuführt, welche zur Kühlung der Wand der Brennkammer 4 (und gegebenenfalls auch der Schubdüse 5) des Raketentriebwerks dient. Im Rahmen der Kühlung nimmt der erste Treibstoff Wärme aus der Brennkammer 4 (und gegebenenfalls der Schubdüse 5) auf. Eine weitere Zuführung 7 führt den ersten Treibstoff mit der in ihm gespeicherten thermischen Energie aus der Brennkammer ab. Diese thermische Energie wird zum Antrieb einer Turbine 6 genutzt, die die Treibstoffpumpe 2 antreibt. Danach wird der erste Treibstoff über eine Zuführung 8 dem Einspritzkopf 9 des Raketentriebwerks zugeführt und zur Verbrennung in die Brennkammer 4 eingespritzt. Der zweite Treibstoff (z.B.: flüssiger Sauerstoff) wird direkt nach Passieren der Treibstoffpumpe 2 durch die Zuführung 10 dem Einspritzkopf 9 zugeführt und ebenfalls in die Brennkammer eingespritzt.

Um bei dem vorstehend beschriebenen Triebwerk möglichst hohe Brennkammerdrücke zu erzielen, die einen möglichst effektiven Betrieb des Triebwerks gewährleisten, ist es erforderlich, dass eine möglichst große Wärmemenge vom ersten Treibstoff beim Durchlauf durch die Kühleinrichtung aufgenommen wird, damit der Treibstoff mit möglichst hoher Temperatur in die Turbine eintreten kann und eine entsprechend hohe Verdichtung der zugeführten Treibstoffe in den Treibstoffpumpen erzeugt werden kann.

Die Querschnittdarstellung der Fig. 2 zeigt detaillierter den Aufbau einer beispielhaften Brennkammer 4, welche eine Verengung 11 aufweist, den sogenannten Brennkammerhals. In der Brennkammerwand 15 sind Kühlkanäle 14 ausgebildet, die von einem Kühlmittel, im obigen Fall von dem ersten Treibstoff, durchströmt werden. Die Kühlkanäle 14 sind auf der von der Heißgasseite abgewandten Rückseite der inneren Oberfläche 12' der Brennkammerwand 15 ausgebildet. Die Brennkammerwand 15 besteht dazu aus einer inneren Schicht 12, die zur Brennkammer 4 hin die innere Oberfläche 12' aufweist, und einer äußeren Schicht 13, wobei die Kühlkanäle 14 zwischen der inneren Schicht 12 und der äußeren Schicht 13 ausgebildet sind.

Stromabwärts des Brennkammerhalses 11 in Richtung S des Heißgasstroms, der durch die Brennkammer 4 in Richtung der Schubdüse 5 strömt, ist die innere Schicht 12 der Brennkammerwand 15 mit einer hydrophoben Beschichtung 16 versehen. Die hydrophobe Beschichtung 16 ist auf die in diesem Bereich der Brennkammerwand 15 aufgeraute innere Oberfläche 12" aufgebracht. Die Oberflächenrauigkeit im Bereich der unter der Beschichtung 16 liegenden Oberfläche 12" der Brennkammerwand 15 ist deutlich größer, als die Rauigkeit der inneren Oberfläche 12' der Brennkammerwand 15 in den nicht mit der hydrophoben Beschichtung versehenen Bereichen.

Anstelle der Beschichtung der Brennkammerwand 15 mit einer hydrophoben Schicht 16 kann auch jegliche andere Oberflächenbearbeitung der Brennkammerwand 15 vorgesehen sein, die zu hydrophoben Eigenschaften der inneren Oberfläche der Brennkammerwand 15 führt.

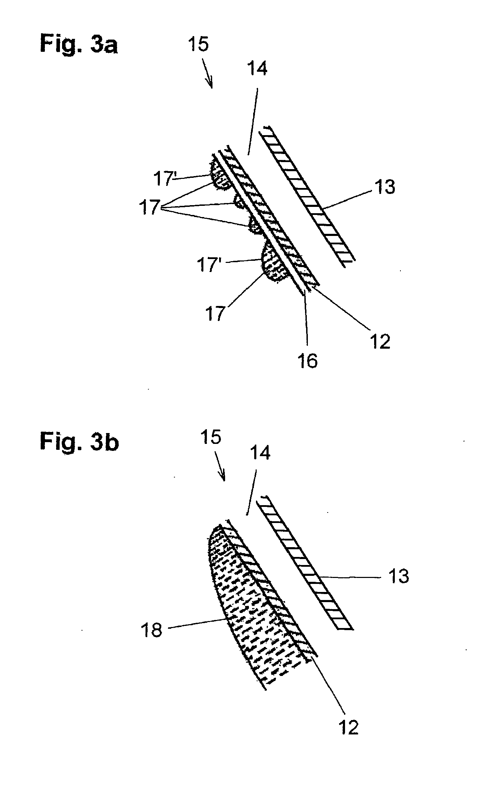

Fig. 3a zeigt die Brennkammerwand 15 im Bereich der Einzelheit III in Fig. 2. Die innere Schicht 12 der Brennkammerwand 15 ist an dieser Stelle mit der hydrophoben Beschichtung 16 versehen. Das sich an der Innenseite der Brennkammerwand 15 auf der hydrophoben Schicht 16 niederschlagende Kondensat bildet hier eine Vielzahl von Tröpfchen 17 aus, deren jeweilige freie Oberfläche 17' ausreichend Angriffsfläche für die vorbeiströmende Heißgasströmung bildet, so dass diese niedergeschlagenen Tröpfchen vom Heißgas mitgerissen und wieder zerstäubt werden.

Fig. 3b zeigt einen vergleichbaren Bereich einer Brennkammerwand bei einer herkömmlichen Brennkammer ohne hydrophobe Beschichtung. Dort bildet sich auf der hydrophilen inneren Oberfläche der inneren Schicht 12 ein Kondensatfilm 18 aus. Es kann dabei zum Ablösen großflächiger Bereiche des Kondensatfilms aufgrund der Kräfte des vorbeiführenden Heißgasstroms kommen, wobei der Kondensatfilm als größere Kondensatansammlung erhalten bleibt und auf die innere Oberfläche der stromabwärtigen Schubdüse 5 aufprallen kann.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 4: Brennkammer
- 11: engster Querschnitt
- 12', 12": innere Oberfläche
- 14: Kühlkanäle
- 15: Brennkammerwand
- 16: hydrophobe Beschichtung

## Patentansprüche

1. Heißgaskammer, insbesondere Brennkammer für ein Triebwerk zum Ausstoß einer heißen Gasströmung, insbesondere für ein Raketentriebwerk, mit einer Brennkammerwand (15), die eine innere Oberfläche (12', 12") und an diese außen angrenzende Kühlkanäle (14) aufweist,
**dadurch gekennzeichnet,**
**dass** die zur Brennkammer (4) weisende innere Oberfläche (12', 12") der Brennkammerwand (15) zumindest bereichsweise zur Vermeidung von Filmkondensation ausgestaltet ist.

2. Heißgaskammer nach Anspruch 1,
**dadurch gekennzeichnet,**
**dass** der Bereich der inneren Oberfläche (12") stromabwärts des engsten Querschnitts (11) der Brennkammer (4) zur Vermeidung von Filmkondensation ausgestaltet ist.

3. Heißgaskammer nach Anspruch 1 oder 2,
**dadurch gekennzeichnet,**
**dass** die zur Brennkammer (4) weisende innere Oberfläche (12', 12") der Brennkammerwand (15) zumindest bereichsweise zur Vermeidung von Filmkondensation hydrophob ausgebildet ist.

4. Heißgaskammer nach Anspruch 3,
**dadurch gekennzeichnet,**
**dass** der hydrophob ausgebildete Bereich der inneren Oberfläche (12") mit einer hydrophoben Beschichtung (16) versehen ist.

5. Heißgaskammer nach Anspruch 4,
**dadurch gekennzeichnet,**
**dass** die innere Oberfläche (12") der Brennkammerwand (15) unter der hydrophoben Schicht (16) eine gegenüber der Oberfläche (12') im nicht mit einer hydrophoben Beschichtung versehenen Brennkammerwandbereich erhöhte Rauigkeit aufweist.
